# EUROPÄISCHE PATENTSCHRIFT

(11) **EP 3 325 142 B1**
(45) Veröffentlichungstag und Bekanntmachung des Hinweises auf die Patenterteilung: **28.08.2024**
(21) Anmeldenummer: 16745425.5
(22) Anmeldetag: 15.07.2016
(51) Int. Cl.: B01J 19/00, B01J 19/24, F28D 21/00

(54) **MIKROSTRUKTURREAKTOR ZUR DURCHFÜHRUNG EXOTHERMER, HETEROGEN KATALYSIERTER REAKTIONEN MIT EFFIZIENTER VERDAMPFUNGSKÜHLUNG**
MICROSTRUCTURE REACTOR FOR CARRYING OUT EXOTHERMIC HETEROGENOUSLY-CATALYSED REACTIONS WITH EFFICIENT EVAPORATIVE COOLING
MICRORÉACTEUR STRUCTURÉ DESTINÉ À LA CONDUITE DE RÉACTIONS DE CATALYSE HÉTÉROGÈNE EXOTHERMIQUES AVEC UN REFROIDISSEMENT PAR ÉVAPORATION EFFICACE

(30) Priorität: 17.07.2015 DE 102015111614
(43) Veröffentlichungstag der Anmeldung: 30.05.2018
(73) Patentinhaber: Karlsruher Institut für Technologie (KIT), 76131 Karlsruhe (DE)
(72) Erfinder: PFEIFER, Peter, 76351 Linkenheim (DE); PIERMARTINI, Paolo, 76137 Karlsruhe (DE); WENKA, Achim, 75196 Remchingen (DE)
(74) Vertreter: Meissner Bolte Düsseldorf Patentanwälte Rechtsanwälte Partnerschaft mbB
(86) Internationale Anmeldenummer: PCT/EP2016/066869
(87) Internationale Veröffentlichungsnummer: WO 2017/013003

(56) Entgegenhaltungen:
- EP-A2- 1 038 575
- EP-A2- 1 123 734
- WO-A1-2012/104058

## Beschreibung

Die vorliegende Erfindung betrifft einen Mikrostrukturreaktor für die Durchführung von exothermen katalytischen Reaktionen.

Mikrostrukturreaktoren sind bereits in verschiedenen Ausführungen realisiert worden und werden bereits in einer Mikroverfahrenstechnik für bestimmte Anwendungen kommerziell eingesetzt. Die Auslegung erfolgt unter der speziellen Berücksichtigung mikrotechnischer Randbedingungen. Ein Mikrostrukturreaktor umfasst mindestens, aber nicht ausschließlich, eine Reaktionszone mit mindestens einem Einlauf und mindestens einem Ablauf. In den Reaktionszonen erfolgen kontrollierte Reaktionen, wobei in mindestens einer Reaktionsszone ein Katalysator zum Einsatz kommt. Eine Ausführung ist auch ohne Katalysator möglich. Grundsätzlich sind die Reaktionszonen als Misch-, oder als Durchflusskavitäten mit Fluidzusammenführung und/oder Aufzweigungen gestaltbar.

Üblicherweise wird zwischen einfachem Kreuzstrom- und Gegen- bzw. Gleichstromverfahren unterschieden. In vielen Fällen besteht ein kreuzstromartiger Anteil. Bei der Verwendung von Kühlmitteln, die keinen Phasenwechsel durchlaufen, ergibt sich eine ungleichmäßige Kapazität zur Kühlung der unterschiedlichen Reaktionskanäle innerhalb einer Platte des Gesamtsystems. Die Anzahl der überstrichenen Reaktionskanäle ist für jeden Kühlkanal unterschiedlich. Der Anstieg der Temperatur führt dazu, dass eine höhere Temperatur im darunter liegenden Kühlkanal auftritt. Diese führt aufgrund der exponentiellen Zunahme der Reaktionsgeschwindigkeit der chemischen Reaktion mit der Temperatur im jeweiligen Reaktionskanal zu einer zusätzlichen Diskrepanz zwischen der Kühlfähigkeit des Kühlmittels und dem Vermögen der Reaktion zur Wärmeentwicklung. Außerdem ändert sich die Viskosität der Fluide, was wiederum zu einer Ungleichverteilung der Medien auf die einzelnen Kanäle und auf der Kühlplatte als auch der Reaktionsplatte führt, die ebenso unerwünscht ist. In diesem Zusammenhang ist die Ungleichverteilung des Reaktionsmediums eine Herausforderung, weil dies automatisch eine unterschiedliche Verweilzeit bedeutet.

Im Falle einer Verdampfungskühlung ist der Sachverhalt noch komplizierter. Ebenso wie bei der Verwendung einphasig bleibender Kühlmittel ändert sich die abzuführende Wärme entlang des Reaktionskanals. Bei einer mindestens partiell vorliegenden Kreuzstromanordnung bedeutet dies einen unterschiedlichen Verdampfungsgrad. Dies ist im Sinne der Nutzung des erzeugten Dampfs für andere Teilsysteme in einem Gesamtprozess für die Wirkungsgraderhöhung der gesamten Prozesskette unerwünscht. Diese gleichmäßige Verteilung wird zusätzlich bezüglich des erzielbaren Gesamtdampfgrades des Kühlmittels negativ beeinflusst. So wird über Bereichen, in denen die Reaktion schneller verläuft, zunächst Dampf entwickelt. Die dort auftretende Zunahme der Geschwindigkeit des Kühlmittels führt zu einer Abnahme des Durchsatzes des spezifischen Kühlkanals durch die Kommunikation bezüglich des Druckes im Gesamtsystem und verstärkt damit den Effekt des unterschiedlichen Verdampfungsgrades des Kühlmittels zwischen den Kanälen einer Platte. Zudem wird die Temperaturkontrolle der Reaktion erschwert. Die mit reinem Dampf überstrichenen Reaktionskanäle können nicht mehr ausreichend gekühlt werden, da der Massenstrom und die spezifische Wärmekapazität des Dampfes deutlich geringer sind.

Ferner ist der allgemein übliche Flächen- und Volumenbedarf der katalytischen Reaktion (> 90 % aller Fälle) deutlich größer als die Kanaloberfläche, die benötigt wird, um die Reaktionswärme abzutransportieren. D.h. die Ebene mit Kühlkanälen ist üblicherweise stark überdimensioniert. Mit anderen Worten, der mögliche Wärmeübergangskoeffizient ist je nach Sichtweise höher als benötigt. Außerdem ist der kalkulierbare Wärmestrom pro Plattenpaar bestehend aus Reaktion und Kühlung größer als die zu übertragende Reaktionsenthalpie. Diese Tatsache kann zusätzlich den Effekt der lokal ungleichmäßigen Verdampfung transversal zu der Reihe der Reaktionskanäle verstärken. Denn die Verdampfung des Kühlmittels kann früher eintreten und vorzeitig abgeschlossen sein. Im Extremfall kann der Verdampfungsvorgang bereits vor den eigentlichen Kühlkanälen erfolgen und die Verteilung des Kühlmittels in longitudinaler Richtung der Reaktionskanäle erschwert werden. Da die Reaktionskanäle häufig vertikal ausgerichtet werden, heißt dies implizit, dass die Verteilung zu den Kühlkanälen ebenfalls vertikal erfolgt und durch die Gravitation beeinflusst wird. So kann schließlich durch Blasenbildung vor den Kühlkanälen der Zugang zu bestimmten Bereichen verhindert sein.

Zur Lösung der aufgezeigten Probleme gibt es im Stand der Technik einige Lösungsansätze. So wird in der WO 002004017008 die Stromführung bei Phasenwechsel in Mikrokanälen beschrieben. Die WO 002004037418 beschreibt die Kreuzstrombauweise mit Füllung von Katalysatoren, wobei der Katalysator gradiert ist, um den Wärmeanfall zu kontrollieren. Aus der WO 002005044442 ist die Möglichkeit der Verteilung in Kanalstrukturen durch Druckbeeinflussung bekannt. In der WO 002005075606 ist der Prozess der Fischer-Tropsch-Synthese mit Co-Katalysatoren in Mikroreaktoren (> 25 % Kobalt-Beladung) dargestellt. Die Schrift betrifft außerdem die Möglichkeit, unterschiedlich viele Kanäle entlang der Reaktionszone zur Kühlung der Reaktion zu nutzen. Die Möglichkeit der Temperaturstaffelung mit unterschiedlichem Kühlmittel ist wiederum aus der WO 002005082519 bekannt. Inhalt der WO 002005065387 ist die prinzipielle Möglichkeit der Nutzung einer Reaktionszone für die Verdampfung. Die notwendigen Maßnahmen zur Vermeidung von zu starker Verformung bei schlitzförmigem Design von Mikrokanälen durch Verstärkung der Seitenwände ergibt sich aus der der WO 002011075746. Aus der WO 002012054455 sowie der WO 2011134630 ist die Verteilung von Reaktionsgas im Kühlmittel mit partieller Kreuzstromanordnung, partieller Zudosierung von Reaktanden und Wärmetausch ganz allgemein dargestellt. Schließlich beschreibt die US 6994829 die Nutzung (gewundener) kleiner Kanäle zur Verdampfung gepaart mit der anschließenden Überhitzung in geraden, größeren Kanälen. Die Kopplung zweier Reaktionen ist aus der US 7014835 sowie der DE 10044526 bekannt. Die Nutzung der Säulenstruktur für mehrphasige Reaktionen mit Zufuhr von Reaktanten ergibt sich aus der DE 102005022958. Eine Darstellung der sequentiellen Durchführung katalytischer Reaktionen mit Zwischenkühlung ist in der DE 10201210344 vorhanden.

In keinem dieser Dokumente wird die notwendige Maßnahme zur effektiven Verteilung von Kühlmittel in kreuzstromartigen Anordnungen beschrieben, welches vollständig verdampft, aber nicht zwangsläufig überhitzt werden soll. Die partielle Zudosierung wird für Reaktionen verwendet und graduierte Katalysatorbetten/Kühlzonen zur besseren Kühlung vorgeschlagen.

EP 1123734 A2 offenbart einen Mikrostrukturreaktor zur Durchführung einer Reaktion zwischen zwei Reaktanten umfassend eine Vielzahl schichtweise angeordneter Platten für die Leitung und Verteilung der Reaktanten sowie von Wärmeträgermedien.

Aufgabe der vorliegenden Erfindung ist es demgemäß, den beschriebenen Problemen abzuhelfen. Insbesondere bleibt die Herausforderung durch parallelisierte Verteilungsstrukturen eine gleichmäßige Temperatur im Gesamtreaktor zu erzielen bestehen.

Gelöst wird diese Aufgabe durch einen Mikrostrukturreaktor zur Durchführung einer exothermen Reaktion zwischen zwei oder mehr Reaktanten, welche in Form von Fluiden über einen oder mehrere Katalysator(en) geleitet werden, gemäß den angehängten Ansprüchen 1 bis 14.

Erfindungsgemäß handelt es sich mithin um mindestens eine Stapelfolge. Demgemäß kann der Mikrostrukturreaktor beliebige Anzahlen von Stapelfolgen aufweisen. Dabei können die einzelnen Lagen plattenförmig oder folienförmig ausgestaltet werden.

Die Dicken der einzelnen Lagen können vorzugsweise in folgenden Bereichen liegen:
Lage a) 0,5 mm bis 10 mm, vorzugsweise 1 mm bis 3 mm
Lage b) 0,1 mm bis 5 mm, vorzugsweise 0,3 mm bis 0,6 mm
Lage c) 1 mm bis 10 mm, vorzugsweise 1 mm bis 3 mm

Erfindungsgemäß können eine oder mehrere Lagen an ihren Oberflächen Strukturen aufweisen. Die in der Lage a) angeordneten Strukturen dienen der Aufnahme der Katalysatoren. Bei diesen Strukturen kann es sich mithin um Reaktionskanäle oder auch sogenannte Reaktionsschlitze handeln, welche mit Partikeln des Katalysatormaterials befüllt oder mit Katalysator beschichtet werden. Die Höhe der Reaktionskanäle kann zwischen 0,4 mm und 8 mm, vorzugsweise 0,8 mm und 1,5 mm liegen.

Als Katalysatoren kommen erfindungsgemäß vorzugsweise Kobalt, Eisen, Nickel, Rhodium oder Rhutenium in Betracht. Es können auch Verbindungen eingesetzt werden, welche diese Elemente enthalten. Ebenso sind Kombinationen eines oder mehrerer der genannten Elemente möglich. Ebenso können die genannten Katalysatoren mit weiteren nicht genannten geeigneten, dem Fachmann bekannten Katalysatoren verwendet werden.

Erfindungsgemäß dienen die Katalysatoren der Durchführung von Reaktionen. Es handelt sich hierbei erfindungsgemäß um exotherme Reaktionen. Vorzugsweise werden hierfür Fluide, welche die Reaktanten enthalten oder daraus bestehen, über die katalysatorhaltigen Oberflächen geleitet. Es kann sich hierbei um gasförmige oder flüssige Fluide handeln, welche die betreffenden Reaktanten enthalten oder daraus bestehen. Damit bildet sich über den Katalysatoren ein Reaktionsbereich aus, in dem es zur Umsetzung der Fluide kommt. Bei den erfindungsgemäß eingesetzten Fluiden können beispielsweise Synthesegase, Wasserstoff/Sauerstoff und Kohlenwasserstoffe, wie Methane, Alkene u.s.w. zum Einsatz kommen. Zwei oder mehr der genannten Fluide können beliebig kombiniert werden.

Ein Anwendungsbeispiel ist die Fischer-Tropsch-Reaktion. Bei dieser wird aus Synthesegas bei einer Mischung aus Kohlenmonoxid und Wasserstoffgas eine Vielzahl von überwiegend aus Alkanen unterschiedlicher Kettenlänge bestehenden Flüssigkeiten gebildet, die durch entsprechende Aufbereitungsschritte in Diesel oder kerosinhaltige synthetische Kraftstoffe umgewandelt werden. Bei der Umwandlung können gegebenenfalls auch Olefine und Isomere entstehen. Die Alkane können in flüssiger oder auch gasförmiger Form vorliegen. Die betreffende Reaktion ist stark exotherm und in dem vorliegenden Mikrostrukturreaktor durchführbar.

Die erfindungsgemäße Stapelfolge enthält als Lage b) Kühlfelder. D. h. in dieser Lage sind zwei oder mehrere Kühlfelder angeordnet. Die in der Reaktionsfläche anfallende Wärme wird von diesen Kühlfeldern aufgenommen. Die einzelnen Felder haben gleiche Kühleigenschaften oder weisen im Verhältnis zueinander die gleiche Kühlleistung auf. Damit wird eine gleichmäßige Kühlung des gesamten Reaktionsbereiches erreicht. Jedes Feld entlang eines spezifischen Versorgungskanals und/oder der Verteilerstruktur wird erfindungsgemäß mit der nahezu gleichen Menge an Kühlmittel bei nahezu gleicher Temperatur, versorgt.

Die Kühlfelder können verschiedene Strukturen haben. Wesentlich ist, dass die Kanäle für das erwärmte bzw. in die Dampfform überführte Kühlmittel gekrümmt sind, also mindestens eine Krümmung aufweisen. Hierdurch wird erreicht, dass die Gewichtskraft wenig Einfluss auf die Strömung hat und ein Ausschleudern von Flüssigkeitstropfen vermieden wird. In den Kühlfeldern verläuft das Kühlmittel ring- und/oder wellenförmig (Lage (2)) und wird dann über die Verteilerstruktur (Lage (3)) wieder abgeführt.

Das erfindungsgemäß eingesetzte Kühlmittel ist vorzugsweise flüssig. Im einfachsten Falle handelt es sich um Wasser. Daneben sind auch andere Kühlmittel einsetzbar. Beispiele sind Ammoniak, Butan, Glykol, Fluor chlorierte Kohlenwasserstoffe und Propan. Auch alle anderen dem Fachmann bekannten Kühlmittel können zum Einsatz kommen. Zwei oder mehrere der genannten Kühlmittel können auch in Verbindungskombiantionen eingesetzt werden.

Erfindungsgemäß ist eine Verteilerstruktur für die Zufuhr von Kühlmittel vorgesehen. Über diese Struktur erfolgt die getrennte Zuleitung des Kühlmittels zu den einzelnen Feldern. Die Gleichverteilung des Kühlmittels auf die jeweiligen Felder wird dadurch erreicht, dass der Druckverlust über jedem Kühlfeld wesentlich größer als der Druckverlust in den Kanälen der Verteiler Struktur ist.

Erfindungsgemäß sind die einzelnen Kühlfelder mit Leitungen für den Ein- und Ablauf des Kühlmittels vorgesehen. In jedem einzelnen Kühlfeld gibt es einen Zulauf und einen Ablauf für das Kühlmittel.

Erfindungsgemäß sind die Zufuhrleitungen für das Kühlmittel im hydraulischen Durchmesser in Fließrichtung des Kühlmittels absteigend ausgelegt. Die Abfuhrkanäle sind im Gegensatz dazu im hydraulischen Durchmesser in Fließrichtung des Kühlmittels aufsteigend angelegt. Vorzugsweise sind die Abfuhrkanäle 2 bis 20-fach größer als die Zufuhrkanäle. Bei druckloser Anwendung kann auch ein bis zu 100-fach größerer Durchmesser in Betracht kommen. Der hydraulische Durchmesser der Zufuhrkanäle liegt bevorzugt bei 500 µm bis 5 mm, besonders bevorzugt bei 700 µm bis 2 mm. Grundsätzlich ist der hydraulische Durchmesser von der Gesamtlänge und der Anzahl der Verteilung des Kühlmittels abhängig. Mit der Zahl der Verteilungen wächst der hydraulische Durchmesser.

Zufuhr und Abfuhr des Kühlmittels liegen mithin innerhalb einer Lage, mit anderen Worten auf einer identischer Ebene. Die Kühlung, gegebenenfalls die Verdampfung des Kühlmittels findet in einer anderen Lage (Ebene statt). Dadurch sind die Wärmeströme zwischen Reaktionslage (Lage 1) und Kühlfeldern in einer getrennten Lage (2) von der Eintrittstemperatur des Kühlmittels entkoppelt.

Bei der Durchführung der erfindungsgemäßen exothermen Reaktionen wird mittels der Kühlfelder die Kühlung erreicht. Durch die getrennte Zufuhr des Kühlmittels zu den einzelnen Kühlfeldern entlang der Reaktionsstrecke kommt es insgesamt verteilt über die Länge der Reaktion zu einer gleichmäßigen Kühlung. Das erwärmte Kühlmittel wird wieder einzeln von jedem Kühlfeld abgeführt. Im Rahmen der Erfindung kann es vorzugsweise zu einer Verdampfung des Kühlmittels kommen, welches über die Abfuhrleitungen wieder abgeführt wird. D.h. erfindungsgemäß wird eine gleichmäßige Verteilung von frischem Kühlmittel und eine Abfuhr von durch die exotherme Reaktion erwärmten Dampf über die gesamte Reaktionsstrecke erreicht. Hierbei sind die Leitungen zur Abfuhr des Dampfes aus den Kühlfeldern mit maximalem Abstand von den kühlmittelführenden Verteilerstrukturen angeordnet, d.h. zwischen Zu- und Ableitungen des Kühlmittels, also zwischen den Zufuhrleitungen die das kühlere Kühlmittel zu den Kühlfeldern leiten und den Abfuhrleitungen, die das erwärmte Kühlmittel, gegebenenfalls Dampf aus dem der Stapelfolge / Reaktor ableiten. Damit wird eine Wärmeleitung zwischen diesen Abschnitten verhindert.

Durch die Entkoppelung der Wärmeströme zwischen Reaktionslage (Lage 1) und Kühlfeldern in Lage 2 von der Eintrittstemperatur des Kühlmittels wird die Vergleichmäßigung der Temperatur in der Reaktionszone trotz eines deutlich unterhalb der Siedetemperatur eintretenden Kühlmittels auf einer, gegebenenfalls bis zu mehreren Quadratmetern großen Fläche der verschiedenen Lagen gewährleistet. Die Verwendung einer Kombination von zwei Lagen, eine für die Kühlung mittels Kühlfelder die andere für die Verteilerstruktur des Kühlmittels verhindert die Überhitzung des Reaktors und stellt eine gleichmäßige Temperaturverteilung, im Wesentlichen eine Isothermie sicher. Verteilerstruktur weist eine parallelisierte Anordung (parallele Anordnung) von mehreren, bevorzugt symmetrischeAnordnung der Leitungen zur Zu- und Abfuhr des Kühlmittels auf. Dies bewirkt eine Stromführung in einem periodischen Wechsel zwischen Gegenstrom und Gleichstrom zwischen den Zu- und Ableitungen - aber in Kreuzstrom zur Stromführung der Reaktanden - ohne die Berücksichtigung der Stromführung in Lage der Kühlfelder. Auch dadurch wird ein maximaler Abstand zwischen Zu- und Ableitungen des Kühlmittels wie oben beschrieben erzielt.

### I. Bezugszeichenliste:

- 1.: Lage a)
- 2.: Lage b)
- 3.: Lage c)
- 4.: Wasser
- 5.: Dampf
- 6.: Kühlfeld
- 7.: Zufuhr von Kühlmitteln
- 8.: Unstrukturierte Lage
- 9.: Abfuhr von Dampf
- 10.: Zuleitung zu verschiedenen Kühlfeldern
- 11.: Longitudinale Führung des Reaktionsmediums
- 12.: Transversale Richtung des Kühlmittels
- 13.: Reaktionsmedium
- 14.: Getrennte Eingabe von Kühlmittel

### II. Übersicht über die Figuren

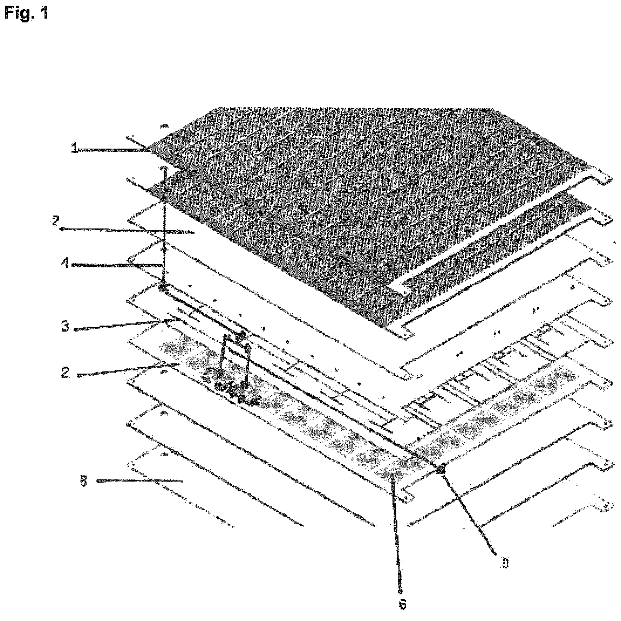

**Figur 1** zeigt im Detail die Anordnung der Lagen.

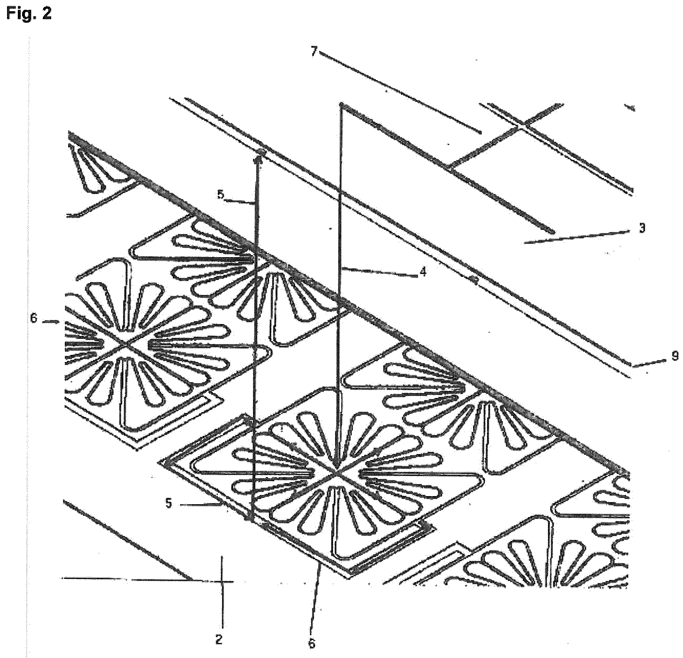

**Figur 2** zeigt die Kühlfelder mit den Zu- und Abfuhrleitungen.

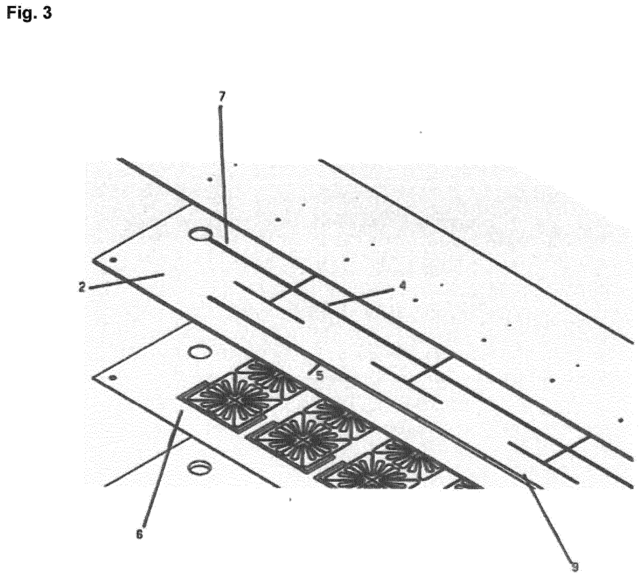

**Figur 3** zeigt in räumlicher Darstellung die Zufuhr und Abfuhr des Kühlmittels.

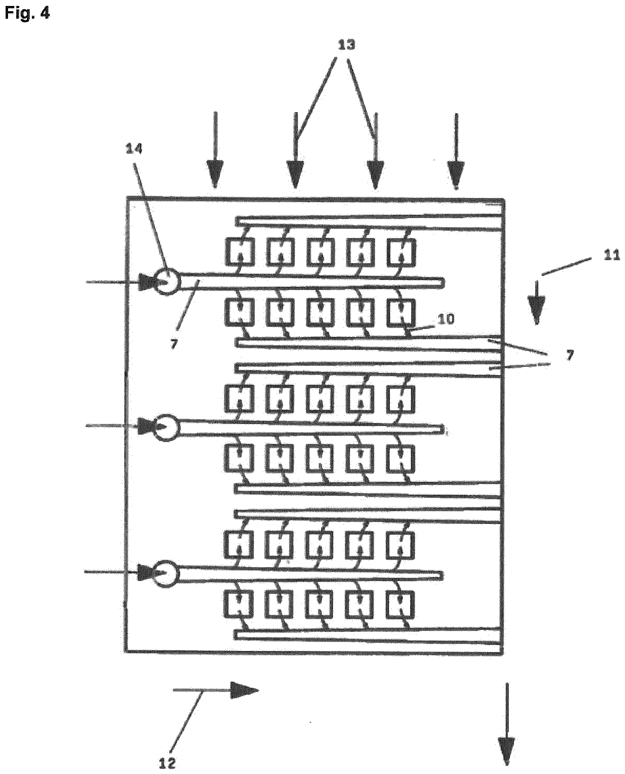

**Figur 4** Führung des Reaktionsmediums und des Kühlmittels.

Aus den Figuren sind die einzelnen Lagen einschließlich der unstrukturierten Lage 8 ersichtlich, d. h. die mit der Ziffer 1 bezeichnete Lage a), die mit der Ziffer 2 gekennzeichneten Lage b) und die mit der Ziffer 3 gekennzeichnete Lage c). Unter der Lage 1 sind die Lage 2 und darunter die Verteilerstruktur 3 angeordnet. Mit anderen Worten, zwischen Lage 1 und der Verteilerstruktur 3 befindet sich die Lage 2 mit den Kühlfeldern 6. Über und unter dieser Stapelfolge schließen sich weitere Stapelfolgen an, die spiegelbildlich zu der beschriebenen Stapelfolge angelegt sind. Über die Leitung 7 wird hierbei das Kühlmittel über die Leitung 10 in die Kühlfelder 6 geführt. Dort erwärmt sich das Kühlmittel infolge der exothermen Reaktion, welche unter Einfluss der Katalysatoren in der Lage 1 entsteht. Das erwärmte in der Regel als Dampf vorliegende Kühlmittel, z. B. Wasser 4, wird über die Leitung 5 abgeführt. Die Abfuhr des regelmäßig entstehenden Dampfes erfolgt schließlich über die Leitung 9. Dadurch wird das Entstehen eines Temperaturgradienten vermieden, welcher regelmäßig dann die Folge bei der exothermen Reaktion ist, bei denen das Kühlmittel entlang der Reaktionsstrecke geführt wird. Bei diesen Konstruktionen nach dem Stand der Technik erwärmt sich allmählich das Kühlmittel und kann sich im Extremfall an die Reaktionstemperatur angleichen.

Die Zuleitung des Kühlmittels, z. B. Wasser 4, kann über die Eingabe 14 in die Zufuhrleitung 7 getrennt erfolgen. Von dort erfolgt über die Leitung 10 die Zuleitung des Kühlmittels zu den verschiedenen Kühlfeldern 6. Hierbei erfolgt die Führung des Kühlmittels in Leitung 7 in transversaler Richtung 12 zur Richtung des Volumenstroms des Reaktionsmittels 13. D. h., das Reaktionsmittel 13 wird in longitudinaler Richtung 11 zum Kühlmittel, z. B. Wasser 4, geführt.

## Patentansprüche

1. Mikrostrukturreaktor zur Durchführung einer exothermen Reaktion zwischen zwei oder mehr Reaktanten, welche in Form von Fluiden über einen oder mehrere Katalysator(en) geleitet werden, umfassend wenigstens eine Stapelfolge von
a) wenigstens einer einen oder mehrere Katalysator(en) aufweisenden Lage (1) zur Durchführung wenigstens einer exothermen Reaktion,
b) wenigstens einer in zwei oder mehrere Kühlfelder (6) unterteilten Lage (2), wobei die Kanäle für das erwärmte bzw. in die Dampfform überführte Kühlmittel gekrümmt sind und wobei es in jedem einzelnen Kühlfeld einen Zulauf und einen Ablauf für das Kühlmittel gibt,
c) wenigstens einer Verteilerstrukturen aufweisenden Lage (3) für die getrennte Zuleitung des Kühlmittels zu den einzelnen Feldern,
- mit Leitungen zur Verteilung des Kühlmittels,
- mit Anschlüssen für die Zufuhr von Kühlmittel zu den Leitungen der Verteilerstruktur und für die Verbindung zu den Kühlfeldern,
- Anschlüssen zur Abfuhr des erwärmten Kühlmittels aus den Kühlfeldern und
- Leitungen und Anschlüssen zur Abfuhr des erwärmten Kühlmittels aus der Stapelfolge.

2. Mikrostrukturreaktor nach Anspruch 1 **dadurch gekennzeichnet, dass** er mehrere Stapelfolgen aufweist.

3. Mikrostrukturreaktor nach einem der vorhergehenden Ansprüche **dadurch gekennzeichnet, dass** die einzelnen Lagen plattenförmig oder folienförmig ausgestaltet sind.

4. Mikrostrukturreaktor nach Anspruch 3 **dadurch gekennzeichnet, dass** die einzelnen Lagen folgende Dicken aufweisen:
Lage a) 0, 5 mm bis 10 mm,
Lage b) 0,1 mm bis 5 mm,
Lage c) 1 mm bis 10 mm.

5. Mikrostrukturreaktor nach einem der vorhergehenden Ansprüche **dadurch gekennzeichnet, dass** eine oder mehrere Lagen an ihren Oberfläche Strukturen aufweisen.

6. Mikrostrukturreaktor nach Anspruch 5 **dadurch gekennzeichnet, dass** die Katalysatoren in die Strukturen gefüllt sind.

7. Mikrostrukturreaktor nach Anspruch 6 **dadurch gekennzeichnet, dass** die Strukturen Reaktionskanäle oder Reaktionsschlitze sind, welche mit Partikeln befüllt sind.

8. Mikrostrukturreaktor nach Anspruch 7 **dadurch gekennzeichnet, dass** die Reaktionskanäle oder Reaktionsschlitze eine Höhe von 0,4 mm bis 8 mm aufweisen.

9. Mikrostrukturreaktor nach einem der vorhergehenden Ansprüche **dadurch gekennzeichnet, dass** innerhalb der Verteilungsstrukturen die Leitungen der kühlmittelführenden Zufuhr mit maximalem Abstand von den Leitungen zur Abfuhr des Kühlmittels aus den Kühlfeldern angeordnet sind.

10. Mikrostrukturreaktor nach Anspruch 9 **dadurch gekennzeichnet, dass** die Zufuhrleitungen für das Kühlmittel im hydraulischen Durchmesser in Fließrichtung des Kühlmittels absteigend sind.

11. Mikrostrukturreaktor nach Anspruch 10 **dadurch gekennzeichnet, dass** die Abführleitungen für den Dampf im hydraulischen Durchmesser in Fließrichtung des Kühlmittels ansteigend sind.

12. Mikrostrukturreaktor nach einem der vorhergehenden Ansprüche **dadurch gekennzeichnet, dass** jedes Kühlfeld eine einzelne Zu- und Abfuhr des Kühlmittels in der Verteilerstruktur aufweist.

13. Mikrostrukturreaktor nach einem der vorhergehenden Ansprüche **dadurch gekennzeichnet, dass** die Katalysatoren Kobalt, Eisen, Nickel, Rhodium oder Ruthenium-Katalysator sind oder solche Elemente enthalten.

14. Mikrostrukturreaktor nach einem der vorhergehenden Ansprüche **dadurch gekennzeichnet, dass** die Zu- und Abfuhr des Kühlmittels in der Verteilerstruktur im Kreuzstrom zur Stromführung der Reaktanden angeordnet sind.

## Claims

1. Microstructure reactor for carrying out an exothermic reaction between two or more reactants which are passed in the form of fluids over one or more catalyst(s), comprising at least one stack sequence of
a) at least one layer (1) comprising one or more catalyst(s) for carrying out at least one exothermic reaction
b) at least one layer (2) divided into two or more cooling fields (6), wherein the channels for the heated coolant or coolant transferred to the vapour form are curved and wherein in each individual cooling field there is an inlet and an outlet for the coolant,
c) at least one layer (3) having distributor structures for the separate supply of the coolant to the individual fields,
- with lines for distributing the coolant,
- with connections for the supply of coolant to the lines of the distributor structure and for the connection to the cooling fields,
- connections for discharging the heated coolant from the cooling fields and
- lines and connections for discharging the heated coolant from the stack sequence.

2. Microstructure reactor according to claim 1, **characterised in that** it has several stacking sequences.

3. Microstructure reactor according to one of the preceding claims, **characterised in that** the individual layers are plate-shaped or film-shaped.

4. Microstructure reactor according to claim 3, **characterised in that** the individual layers have the following thicknesses:
Layer a) 0.5 mm to 10 mm,
layer b) 0.1 mm to 5 mm,
layer c) 1 mm to 10 mm.

5. Microstructure reactor according to one of the preceding claims, **characterised in that** one or more layers have structures on their surface.

6. Microstructure reactor according to claim 5, **characterised in that** the catalysts are filled into the structures.

7. Microstructure reactor according to claim 6, **characterised in that** the structures are reaction channels or reaction slots which are filled with particles.

8. Microstructure reactor according to claim 7, **characterised in that** the reaction channels or reaction slots have a height of 0.4 mm to 8 mm.

9. Microstructure reactor according to one of the preceding claims, **characterised in that** the lines of the coolant-carrying supply are arranged within the distribution structures at a maximum distance from the lines for discharging the coolant from the cooling fields.

10. Microstructure reactor according to claim 9, **characterised in that** the supply lines for the coolant are descending in hydraulic diameter in the direction of flow of the coolant.

11. Microstructure reactor according to claim 10, **characterised in that** the discharge lines for the vapour are ascending in hydraulic diameter in the direction of flow of the coolant.

12. Microstructure reactor according to one of the preceding claims, **characterised in that** each cooling field has an individual supply and discharge of the coolant in the distributor structure.

13. Microstructure reactor according to one of the preceding claims, **characterised in that** the catalysts are cobalt, iron, nickel, rhodium or ruthenium catalyst or contain such elements.

14. Microstructure reactor according to one of the preceding claims, **characterised in that** the supply and discharge of the coolant in the distributor structure are arranged in cross-flow to the flow guidance of the reactants.

## Revendications

1. Réacteur à microstructure destiné à réaliser une réaction exothermique entre deux ou plusieurs réactifs acheminés sous forme de fluides via un ou plusieurs catalyseurs, comprenant au moins une séquence d'empilement de
a) au moins une couche (1) présentant un ou plusieurs catalyseur(s) pour réaliser au moins une réaction exothermique,
b) au moins une couche (2) subdivisée en deux ou plusieurs champs de refroidissement (6), les canaux pour l'agent réfrigérant, chauffé ou transféré en forme de vapeur, étant courbés, et une entrée et une sortie pour l'agent réfrigérant étant prévues dans chaque champ de refroidissement individuel,
c) au moins une couche (3) présentant des structures de distribution pour l'amenée séparée de l'agent réfrigérant aux champs individuels, comprenant
- des conduites pour la distribution de l'agent réfrigérant,
- des raccords pour l'amenée de l'agent réfrigérant aux conduites de la structure de distribution et pour le raccordement aux champs de refroidissement,
- des raccords pour l'évacuation de l'agent réfrigérant chauffé hors des champs de refroidissement, et
- des conduites et des raccords pour l'évacuation de l'agent réfrigérant chauffé hors de la séquence d'empilement.

2. Réacteur à microstructure selon la revendication 1,
**caractérisé en ce qu'**il comprend plusieurs séquences d'empilement.

3. Réacteur à microstructure selon l'une des revendications précédentes,
**caractérisé en ce que** les couches individuelles sont conçues en forme de plaques ou en forme de feuilles.

4. Réacteur à microstructure selon la revendication 3,
**caractérisé en ce que** les couches individuelles présentent les épaisseurs suivantes :
couche a) 0,5 mm à 10 mm,
couche b) 0,1 mm à 5 mm,
couche c) 1 mm à 10 mm.

5. Réacteur à microstructure selon l'une des revendications précédentes, **caractérisé en ce qu'**une ou plusieurs couches présentent des structures à leur surface.

6. Réacteur à microstructure selon la revendication 5,
**caractérisé en ce que** les catalyseurs sont chargés dans les structures.

7. Réacteur à microstructure selon la revendication 6,
**caractérisé en ce que** les structures sont des canaux de réaction ou des fentes de réaction qui sont rempli(e)s de particules.

8. Réacteur à microstructure selon la revendication 7,
**caractérisé en ce que** les canaux de réaction ou les fentes de réaction ont une hauteur de 0,4 mm à 8 mm.

9. Réacteur à microstructure selon l'une des revendications précédentes, **caractérisé en ce que**, à l'intérieur des structures de distribution, les conduites d'amenée acheminant l'agent réfrigérant sont disposées à une distance maximale des conduites d'évacuation de l'agent réfrigérant hors des champs de refroidissement.

10. Réacteur à microstructure selon la revendication 9,
**caractérisé en ce que** les conduites d'amenée de l'agent réfrigérant sont de diamètre hydraulique décroissant dans le sens d'écoulement de l'agent réfrigérant.

11. Réacteur à microstructure selon la revendication 10,
**caractérisé en ce que** les conduites d'évacuation de la vapeur sont de diamètre hydraulique croissant dans le sens d'écoulement de l'agent réfrigérant.

12. Réacteur à microstructure selon l'une des revendications précédentes,
**caractérisé en ce que** chaque champ de refroidissement comprend une seule amenée et une seule évacuation de l'agent réfrigérant dans la structure de distribution.

13. Réacteur à microstructure selon l'une des revendications précédentes,
**caractérisé en ce que** les catalyseurs sont des catalyseurs au cobalt, au fer, au nickel, au rhodium ou au ruthénium ou contiennent de tels éléments.

14. Réacteur à microstructure selon l'une des revendications précédentes,
**caractérisé en ce que** l'amenée et l'évacuation de l'agent réfrigérant dans la structure de distribution sont disposées en courant croisé pour l'acheminement du flux des réactifs.
